# EUROPEAN PATENT SPECIFICATION

(11) **EP 3 693 814 B1**
(45) Date of publication and mention of the grant of the patent: **01.11.2023**
(21) Application number: 20154439.2
(22) Date of filing: 29.01.2020
(51) Int. Cl.: G05B 15/02

(54) **MAPPING A LOOP OBJECT TO A FEEDBACK LOOP**
ABBILDUNG EINES SCHLEIFENOBJEKTS IN EINE RÜCKKOPPLUNGSSCHLEIFE
MISE EN CORRESPONDANCE D'UN OBJET EN BOUCLE SUR BOUCLE FERMÉE

(30) Priority: 05.02.2019 US 201916268202
(43) Date of publication of application: 12.08.2020
(73) Proprietor: Honeywell International Inc. Intellectual Property - Patent Services, Morris Plains, NJ 07950 (US)
(72) Inventor: POLURI, Nagasree, Morris Plains NJ 07950 (US); KARUNAKARAN, Deenadayalan, Morris Plains NJ 07950 (US); P, Seema, Morris Plains NJ 07950 (US); MAKAM, Ankith, Morris Plains NJ 07950 (US)
(74) Representative: Houghton, Mark Phillip

(56) References cited:
- US-A1- 2015 178 421
- US-A1- 2016 366 010
- US-A1- 2019 017 719

## Description

### Technical Field

The present disclosure relates generally to systems, methods, and devices for mapping a loop object to a feedback loop.

### Background

A heating, ventilation, and air conditioning (HVAC) system can be used to control the environment within a facility (e.g., building). For example, an HVAC system can include a number of components (e.g., equipment, sensors, operating panels, controllers, actuators, etc.) that can be used to control the elements (e.g., air temperature, pressure, humidity, air quality, etc.) of different zones (e.g., rooms, areas, spaces, and/or floors) of a facility, in order to keep the zones in a comfort state for their occupants.

An HVAC system can use a number of feedback loops to control the number of elements. Further, each of the number of elements can include more than one feedback loop. For example, the HVAC system can include a feedback loop to control the air temperature and another feedback loop to control the pressure of a zone of a facility. Due to the volume of feedback loops within an HVAC system, it can be difficult to uniquely identify any single feedback loop and control its parameters. Additionally, occupants' desire to better control the comfort level of a facility requires monitoring and controlling of the parameters during the operation of the HVAC system.

Currently, there is no existing system which can help a system integrator (SI) (e.g., a person tasked with the setup of a building control system) identify and control a single feedback loop within an existing HVAC system (e.g., a legacy application). Control of each individual feedback loop within an HVAC system requires creating and configuring a new application for a site. This can involve travel to each individual site, cost for accommodations, time to manually review the system to determine device types and other device information, increased complexity in deployment, and other business costs.

**[0004.1]** US2015/178421A1 discloses deriving performance models for components of an HAVC system, and using the performance models to perform automated commissioning of the HVAC system. The performance models can include modeling parameter identifiers for historical and real-time data for the components of the HVAC system, and that during the automated commissioning, a set of inputs and outputs for the components is selected.

**[0004.2]** US2016/366010 discloses a smart communications controller that includes an equipment controller for controlling building equipment and that the smart communications controller includes an attribute mapping database that maps attributes used by the equipment controller with protocol-specific messages exchanged between the smart communications controller and external systems or devices.

### Brief Description of the Drawings

Figure 1 illustrates an example of a system for mapping a loop object to a feedback loop in accordance with an embodiment of the present disclosure.
Figures 2A-2B illustrate example screen shots of displays provided for mapping a loop object to a feedback loop in accordance with an embodiment of the present disclosure.
Figure 3 illustrates an example of a method for mapping a loop object to a feedback loop in accordance with an embodiment of the present disclosure.
Figure 4 illustrates an example of a control device for mapping a loop object to a feedback loop in accordance with an embodiment of the present disclosure.

### Detailed Description

The present invention in its various aspects is as set out in the appended claims._Systems, methods, and devices for mapping a loop object to a feedback loop are described herein. For example, an embodiment includes a memory, and a processor configured to execute executable instructions stored in the memory to create a loop object corresponding to a feedback loop associated with an HVAC system, and map the loop object to the feedback loop. Embodiments of the present disclosure can allow for creating a loop object using a control device associated with the HVAC system and mapping a set of parameters associated with the loop object to a set of corresponding parameters associated with an existing feedback loop in order to monitor and control individual elements of the HVAC system.

Accordingly, embodiments of the present disclosure may reduce the cost, difficulty, and/or amount of time needed to set up and/or use a system for monitoring and controlling individual elements of the HVAC system, and/or may reduce the amount of maintenance and/or repair issues that arise during operation of the HVAC system, as compared with previous approaches that lack such identification of existing feedback loops.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that mechanical, electrical, and/or process changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure, and should not be taken in a limiting sense.

The figures herein follow a numbering convention in which the first digit or digits correspond to the drawing figure number and the remaining digits identify an element or component in the drawing. Similar elements or components between different figures may be identified by the use of similar digits.

As used herein, "a", "an", or "a number of" something can refer to one or more such things, while "a plurality of" something can refer to more than one such things. For example, "a number of devices" can refer to one or more devices, while "a plurality of devices" can refer to more than one device. Additionally, the designator "N" as used herein, particularly with respect to reference numerals in the drawings, indicates that a number of the particular feature so designated can be included with a number of embodiments of the present disclosure.

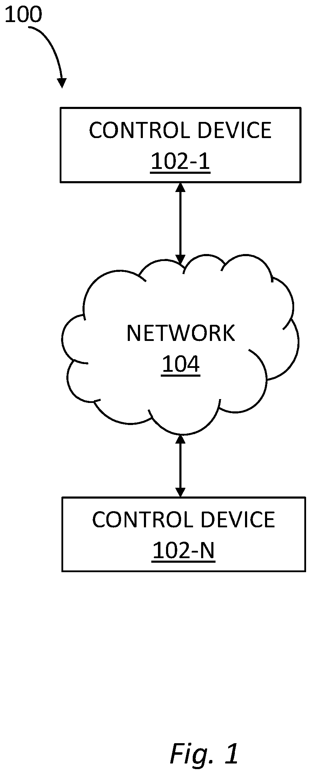

Figure 1 illustrates an example of a system 100 for mapping a loop object to a feedback loop in accordance with an embodiment of the present disclosure. The system 100 can be an HVAC system. The HVAC system can be, for example, the HVAC system of a facility (e.g., building), such as, for instance, a commercial office building. However, embodiments of the present disclosure are not limited to a particular type of facility.

The HVAC system can be used to control the environment within the facility. For example, the HVAC system can include a number of components that can be used to control the air temperature of different zones (e.g., rooms, areas, spaces, and/or floors) of a facility, in order to keep the zones in a comfort state for their occupants. The components of the HVAC system can include, for example, objects, control devices, controllers, equipment, devices, networks, sensors, and/or actuators such as, for instance, valves such as heating and/or cooling valves, chillers (e.g., chiller plant), boilers (e.g., boiler plant), pumps such as hot water and/or chilled water pumps, fans, compressors, air dampers such as variable air volume (VAV) dampers, air handling units (AHUs) (e.g., AHU plant), coils such as heating and/or cooling coils, air filters, and/or cooling towers, among other components. The HVAC system may also include connections (e.g., physical connections) between the components, such as a chain of equipment (e.g., duct work, pipes, ventilation, and/or electrical and/or gas distribution equipment) that connects the components, among other connections.

As shown in Figure 1, system 100 can include a plurality of control devices 102-1, ..., 102-N that are associated with the HVAC system. Control devices 102-1, ..., 102-N can be, for instance, devices used to control (e.g., manage, monitor, and/or adjust) the HVAC system (e.g., the components and/or settings of the HVAC system) during the setup (e.g., installation) and/or operation of the HVAC system. For example, control devices 102-1, ..., 102-N can be devices used by various actors (e.g., users) to map a loop object to a feedback loop. The loop object can be associated with a first control device and the feedback loop can be associated with a second control device. However, embodiments of the present disclosure are not limited to a particular setup. In HVAC systems, various devices can be controlled with modulated signals using feedback loops. In some examples, the feedback loop can be a proportional-integral-derivative (PID) loop. PID is a mathematical logic that provides these three functions (e.g., a proportional constant, an integral constant, and a derivative constant) as parameters that can be tuned, so devices function accurately and optimally.

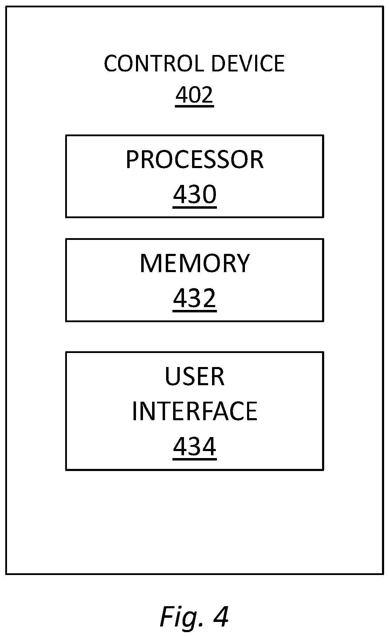

As examples, control devices 102-1, ..., 102-N can include a computing device of an engineer (e.g., a hardware, software, project, or graphic engineer) of the HVAC system performing engineering, commissioning, and/or configuration tasks during the setup of the HVAC system, a computing device of a manager (e.g., a facility manager) of the HVAC system, a computing device of a technician (e.g., a commissioning technician) of the HVAC system performing commissioning tasks during the setup of the HVAC system, and/or a computing device of a technician (e.g., a maintenance or repair technician) performing maintenance or repair tasks on the HVAC system, among other examples. Further, each of control devices 102-1, ..., 102-N can include a memory, a processor, and a user interface, as will be further described herein (e.g., in connection with Figure 4).

As shown in Figure 1, control devices 102-1, ..., 102-N can communicate with each other via network 104. Network 104 can be a wired or wireless network. For example, network 104 can be a network relationship through which control devices 102-1, ..., 102-N can communicate with each other. Examples of such a network relationship can include a distributed computing environment (e.g., a cloud computing environment), a wide area network (WAN) such as the Internet, a local area network (LAN), a personal area network (PAN), a campus area network (CAN), or metropolitan area network (MAN), among other types of network relationships. For instance, the network can include a number of servers that receive information from, and transmit information to, control devices 102-1, ..., 102-N via a wired or wireless network.

As used herein, a "network" can provide a communication system that directly or indirectly links two or more computers and/or peripheral devices and allows users to access resources on other computing devices and exchange messages with other users. A network can allow users to share resources on their own systems with other network users and to access information on centrally located systems or on systems that are located at remote locations. For example, a network can tie a number of computing devices together to form a distributed control network (e.g., cloud).

A network may provide connections to the Internet and/or to the networks of other entities (e.g., organizations, institutions, etc.). Users may interact with network-enabled software applications to make a network request, such as to get a file or print on a network printer. Applications may also communicate with network management software, which can interact with network hardware to transmit information between devices on the network.

Control devices 102-1, ..., 102-N can be configured to identify (e.g., select) a feedback loop associated with a HVAC system. In some examples, users may identify an existing feedback loop associated with an existing HVAC system that they desire to control and monitor using a loop object. For instance, a user may identify a particular existing feedback loop that controls the air temperature of a particular zone within the facility. Upon identifying a particular existing feedback loop that the user desires to control and monitor, a loop object can be created and configured to correspond to the identified feedback loop. This can allow for easy control and monitoring of the identified feedback loop during operation of the HVAC system.

The HVAC system can be an existing (e.g., legacy) system (e.g., a system that has been previously installed and/or commissioned) or a new system (e.g., a system that is currently being installed and/or commissioned). In an example in which the HVAC system is a legacy system, there can be a number of existing feedback loops. Each individual feedback loop can control a component of the HVAC system that controls a particular element (e.g., air temperature, pressure, humidity, and/or air quality, among other elements associated with the HVAC system) of a zone of a facility. A single feedback loop can be identified, from a set of feedback loops, based on a desire to better control a particular element. For example, in an instance where there is a desire to control the air temperature within a particular zone of a facility, the feedback loop that controls the air temperature within that particular zone of a facility can be identified.

Control devices 102-1, ..., 102-N can be configured to create a loop object corresponding to the feedback loop associated with the HVAC system. For example, once a particular feedback loop is identified as a feedback loop corresponding to a component of the HVAC system that controls an element the user desires to control and monitor, a loop object that corresponds to the identified feedback loop can be created using a user interface of one of the control devices 102-1, ..., 102-N. The loop object can be created by inputting information into a user interface of the control device, as described in connection with Figure 4.

Creating the loop object can include inputting, using the user interface, information describing the identified feedback loop. For example, information describing the identified feedback loop can include a loop object name and a description, among other information describing the identified feedback loop. The input name and description can indicate (e.g., to a user) what element and zone of a facility the newly created loop object corresponds to. For example, the newly created loop object can include the loop object name "TempControl_LoopObject" and the description "Room Temperature control loop for first floor", indicating to the user that the newly created loop object corresponds to an identified feedback loop capable of controlling and monitoring the temperature on the first floor of the facility.

Creating the loop object corresponding to the feedback loop associated with the HVAC system can include configuring the loop object. Configuring the loop object can include identifying parameters associated with the identified feedback loop. Thus, during the configuration of the loop object, parameters corresponding to the parameters of the identified feedback loop can be input into the newly created loop object. For example, the set of parameters can include a manipulated variable, a controlled variable, a set point reference, a proportional constant, a derivative constant, an integral constant, a maximum output, a minimum output, an action, and/or a bias, among other parameters. Upon configuration of the set of parameters associated with the newly created loop object, each individual parameter can be mapped to the corresponding parameter associated with the identified feedback loop.

Control devices 102-1, ..., 102-N can be configured to map the loop object to the feedback loop. Mapping the loop object to the feedback loop can include mapping the set of configured parameters associated with the loop object to the corresponding set of parameters associated with the feedback loop. As previously described, the set of configured parameters associated with the loop object can be associated with a first control device, while the corresponding set of parameters associated with the feedback loop can be associated with a second control device. The first control device can be located remotely from the HVAC system (e.g., remotely from the facility whose environment is being controlled by the HVAC system) and the second control device can be a controller associated with (e.g., used to monitor and/or control) a component of the HVAC system. However, embodiments of the present disclosure are not limited to such an example.

Upon creating and configuring the loop object, the set of parameters associated with the loop object can be mapped to the set of parameters associated with the identified feedback loop. For instance, an individual parameter associated with the loop object can be mapped to an individual parameter associated with the identified feedback loop (e.g., one-to-one-mapping).

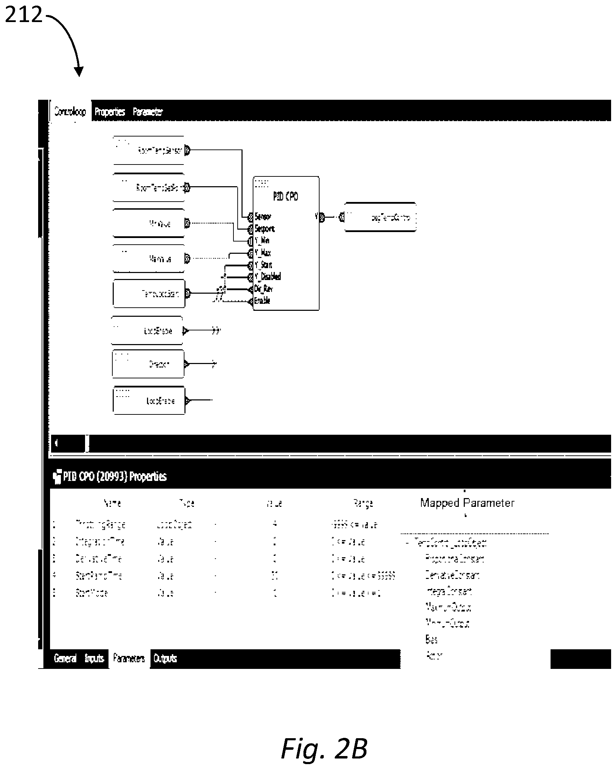

Using the user interface of the control device on which the loop object was created and configured, a user can select (e.g., via a drop-down menu) a parameter associated with loop object to map to a parameter associated with an identified feedback loop. An example of such a mapping with be further described in connection with Figure 2B. In another example, mapping a parameter associated with the loop object to a corresponding parameter associated with the identified feedback loop can be automatically performed by control devices 102-1, ..., 102-N. Each individual parameter associated with the loop object can be mapped to a corresponding parameter associated with the identified feedback loop using the user interface of the control device.

Mapping the loop object to the identified feedback loop can include the control device on which the loop object was created and configured sending instructions to a second control device associated with the identified feedback loop to execute the mapping. Thus, a user can configure and manually map the set of parameters associated with the loop object to the set of parameters associated with the feedback loop using a configuration tool (e.g., application software) on the control device associated with the object loop. The control device associated with the object loop can send instructions to the control device associated with the identified feedback loop to execute (e.g., carry out) the received instructions. This can allow for easy control and monitoring of each individual parameter associated with the identified feedback loop that corresponds to the loop object.

In some embodiments, control devices 102-1, ..., 102-N can be configured to monitor a feedback loop associated with the HVAC system. For example, upon mapping the loop object to the feedback loop, the performance of a specific component of the HVAC system associated with the feedback loop can be monitored during the operation of the HVAC system. Monitoring can include detecting faults (e.g., errors) within the HVAC system and tuning (e.g., adjusting) the parameters of the controller (e.g., the feedback loop) experiencing the fault. Thus, upon detection of a fault in the HVAC system, control devices 102-1, ..., 102-N can identify a single feedback loop causing the fault and tune the parameters associated with the identified feedback loop to ensure optimal control function.

Tuning the parameter associated with the feedback loop experiencing the fault can be completed using the corresponding loop object. For example, the loop object can alert a user to indicate when a particular parameter is causing the feedback loop to fault. Upon the user being alerted of the fault, the loop object can automatically tune the parameter corresponding to the identified parameter associated with the feedback loop. In another example, the user can manually tune the parameter corresponding to the identified parameter associated with the feedback loop. Further, control devices 102-1, ..., 102-N can display details corresponding to the performance of the component on an interface of a control device that the loop object has been created and configured on. This can allow for better control of individual elements of the HVAC system.

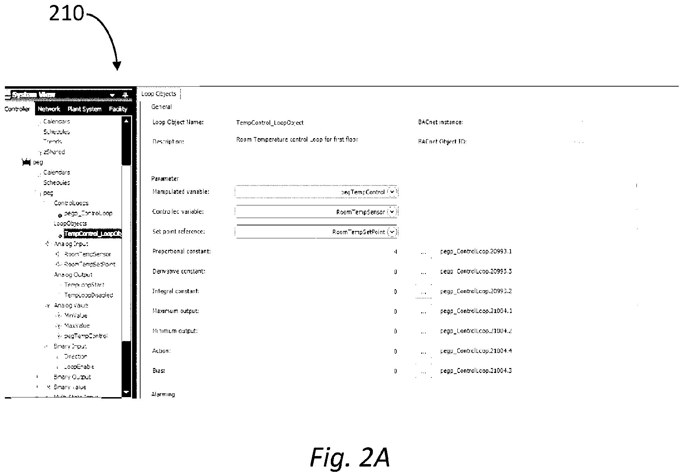

Figures 2A-2B illustrate example screen shots of displays 210 and 212, respectively, provided for mapping a loop object to a feedback loop in accordance with an embodiment of the present disclosure. Displays 210 and 212 can be displayed on a user interface, such as, for instance, a user interface of control devices 102-1, ..., 102-N previously described in connection with Figurer 1. An example of such a user interface will be further described in connection with Figure 4.

As described herein, mapping a loop object to a feedback loop can include creating, configuring, and mapping the loop object using a control device associated with an HVAC system, (e.g., control devices 102-1, ..., 102-N described in connection with Figure 1). The control device can include a user interface to input information associated with the loop object, as described in connection with Figure 4. However, embodiments of the present disclosure are not limited to the displays illustrated in Figures 2A and 2B.

Figure 2A illustrates an example screen shot of a display 210 provided for creating and configuring a loop object. Creating the loop object can include inputting, using the user interface, information describing an identified feedback loop. For example, information describing the identified feedback loop can include a loop object name and a description, among other information describing the identified feedback loop. For example, as illustrated in Figure 2A, the loop object name can be "TempControl_LoopObject" and the description can be "Room Temperature control loop for first floor", indicating to a user that the newly created loop object corresponds to an identified feedback loop capable of controlling and monitoring the temperature on the first floor of the site.

Configuring the loop object can include inputting, using the user interface, a set of parameters associated with the loop object. The set of parameters associated with the loop object can be a set of parameters that correspond to a set of parameters associated with the identified feedback loop. For example, as illustrated in Figure 2A, the set of parameters can include a manipulated variable, a controlled variable, a set point reference, a proportional constant, a derivative constant, a integral constant, a maximum output, a minimum output, an action, and/or a bias, among other parameters. Upon configuration of the set of parameters associated with the newly created loop object, each individual parameter can be mapped to a corresponding parameter associated with the identified feedback loop.

Figure 2B illustrates an example screen shot of a display 212 provided for mapping the configured loop object to an identified feedback loop. As previously described herein (e.g., in connection with Figure 2A), a set of parameters associated with a newly created loop object can be configured to correspond with a set of parameters associated with the identified feedback loop. Thus, upon creating and configuring the loop object, the set of parameters associated the loop object can be mapped to the set of parameters associated with the identified feedback loop. For instance, an individual parameter associated with the loop object can be mapped to an individual parameter associated with the identified feedback loop.

As illustrated in Figure 2B, using the user interface of the control device on which the loop object was created and configured, a user can select (e.g., via a drop-down menu) a parameter associated with the loop object to map to a parameter associated with an identified feedback loop. For example, "ThrottlingRange", which is a parameter associated with the identified feedback loop, can be mapped to "TempControl_LoopObject:ProportionalConstant", which is a parameter associated with the loop object and determined to correspond to "ThrottlingRange". Each individual parameter associated with the loop object can be mapped to a corresponding parameter associated with the identified feedback loop using the user interface of the control device. This can allow for easy control and monitoring of each individual parameter associated with the identified feedback loop that corresponds to the loop object, which in turn allows for easy control and monitoring of the identified feedback loop.

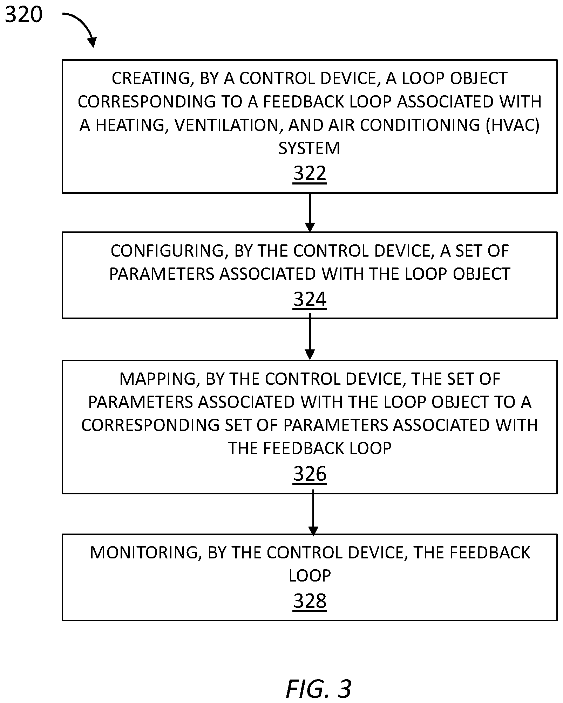

Figure 3 illustrates an example of a method 320 for mapping a loop object to a feedback loop in accordance with an embodiment of the present disclosure. The loop object can be created, configured, and mapped to the feedback loop during the setup of an HVAC system, as previously described herein (e.g., in connection with Figure 1).

At block 322, method 320 includes creating, by a control device (e.g., one of control devices 102-1, ..., 102-N previously described in connection with Figure 1), a loop object corresponding to a feedback loop associated with an HVAC system. The loop object corresponding to the feedback loop can be created, for example, in a manner analogous to that previously described in connection with Figure 1.

At block 324, method 320 includes configuring, by the control device, a set of parameters associated with the loop object. The set of parameters associated with the loop object can be configured, for example, in a manner analogous to that previously described in connection with Figure 1.

At block 326, method 320 includes mapping, by the control device, the set of parameters associated with the loop object to a corresponding set of parameters associated with the feedback loop. The set of parameters associated with the loop object can be mapped to the corresponding set of parameters associated with the feedback loop, for example, in a manner analogous to that previously described in connection with Figure 1. The feedback loop can be associated with a control device, for example, one of the control devices 102-1, ..., 102-N previously described in connection with Figure 1.

At block 328, method 320 includes monitoring, by the control device, the feedback loop. The feedback loop can be monitored, for example, in a manner analogous to that previously described in connection with Figure 1.

Figure 4 illustrates an example of a control device 402 for mapping a loop object to a feedback loop in accordance with an embodiment of the present disclosure. Control device 402 can be an example of control devices 102-1, ..., 102-N previously described in connection with Figure 1. For example, control device 402 can be a computing device used to control the HVAC system during the setup and/or operation of the HVAC system, as previously described in connection with Figure 1.

A computing device, as used herein, can be, refer to, and/or include a laptop computer, desktop computer, or mobile device, such as, for instance, a smart phone or tablet, among other types of computing devices. However, embodiments of the present disclosure are not limited to a particular type of computing device. Further, a mobile device (e.g., smart phone or tablet) in accordance with the present disclosure may include a mobile app for mapping a loop object to a feedback loop in accordance with the present disclosure. As used herein, a mobile app may include and/or refer to computer readable and/or executable instructions (e.g., a computer program) designed to run on a mobile device (e.g., a smart phone or tablet). For instance, a mobile app may be run on control device 402 to map a loop object to a feedback loop in accordance with the present disclosure.

As shown in Figure 4, control device 402 can include a processor 432 and a memory 434. Memory 434 can be any type of storage medium that can be accessed by processor 432 to perform various examples of the present disclosure. For example, memory 434 can be a non-transitory computer readable medium having computer readable instructions (e.g., computer program instructions) stored thereon that are executable by processor 434 to map a loop object to a feedback loop in accordance with the present disclosure. That is, processor 432 can execute the executable instructions stored in memory 434 to map a loop object to a feedback loop in accordance with the present disclosure.

Memory 434 can be volatile or nonvolatile memory. Memory 434 can also be removable (e.g., portable) memory, or non-removable (e.g., internal) memory. For example, memory 434 can be random access memory (RAM) (e.g., dynamic random access memory (DRAM), resistive random access memory (RRAM), and/or phase change random access memory (PCRAM)), read-only memory (ROM) (e.g., electrically erasable programmable read-only memory (EEPROM) and/or compact-disk read-only memory (CD-ROM)), flash memory, a laser disk, a digital versatile disk (DVD) or other optical disk storage, and/or a magnetic medium such as magnetic cassettes, tapes, or disks, among other types of memory.

Further, although memory 434 is illustrated as being located in control device 402, embodiments of the present disclosure are not so limited. For example, memory 434 can also be located internal to another computing resource (e.g., enabling computer readable instructions to be downloaded over the Internet or another wired or wireless connection).

As shown in Figure 4, control device 402 can include a user interface 436. A user (e.g., operator) of control device 402, such as, for instance, the example users previously described in connection with Figure 1, can interact with control device 402 via user interface 436. For example, user interface 436 can provide (e.g., display) information to and/or receive information from (e.g., input by) the user of control device 402.

In some embodiments, user interface 436 can be a graphical user interface (GUI) that can include a display (e.g., a screen) that can provide information to, and/or receive information from, the user of control device 402. The display can be, for instance, a touch-screen (e.g., the GUI can include touch-screen capabilities). As an additional example, user interface 436 can include a keyboard and/or mouse the user can use to input information into control device 402, and/or a speaker that can play audio to, and/or receive audio (e.g., voice input) from, the user. Embodiments of the present disclosure, however, are not limited to a particular type(s) of user interface.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A control device (102-1, 102-N, 402), associated with a heating, ventilation, and air conditioning (HVAC) system, comprising:
a user interface (434);
a memory (432); and
**characterized by**
a processor (430) configured to execute executable instructions stored in the memory to:
receive, from a user via the user interface (434), a selection of an existing feedback loop associated with the HVAC system (322) ;
create, using information received from the user via the user interface (434), a new loop object corresponding to the existing feedback loop, wherein the newly created loop object includes a set of parameters which correspond to a number of parameters associated with the existing feedback loop; and
map the newly created loop object to the existing feedback loop (326), wherein each individual parameter of the set of parameters included in the newly created loop object is mapped to a corresponding individual parameter of the number of parameters associated with the existing feedback loop.

2. The control device (102-1, 102-N, 402) of claim 1, wherein the processor (430) is configured to execute the instructions to send instructions to an additional control device (102-1, 102-N, 402) associated with the existing feedback loop to execute the mapping.

3. The control device (102-1, 102-N, 402) of claim 1, wherein the control device (102-1, 102-N, 402) associated with the HVAC system is located remotely from the HVAC system.

4. The control device (102-1, 102-N, 402) of claim 1, wherein the existing feedback loop controls a component of the HVAC system that controls an element of a zone of a facility.

5. The control device (102-1, 102-N, 402) of claim 4, wherein the element includes at least one of air temperature, pressure, humidity, and air quality of the zone.

6. The control device (102-1, 102-N, 402) of claim 1, wherein the processor (430) is configured to execute the instructions to monitor the existing feedback loop.

7. The control device (102-1, 102-N, 402) of claim 1, wherein the HVAC system is an existing HVAC system.

8. The control device (102-1, 102-N, 402) of claim 1, wherein the HVAC system is a new HVAC system.

## Patentansprüche

1. Steuervorrichtung (102-1, 102-N, 402), die einem Heizungs-, Lüftungs- und Klimaanlagen (HLK)-System zugeordnet ist, das Folgendes umfasst:
eine Benutzeroberfläche (434);
einen Speicher (432); und
**gekennzeichnet durch**
einen Prozessor (430), der dazu konfiguriert ist, ausführbare Anweisungen, die in dem Speicher gespeichert sind, auszuführen, um:
von einem Benutzer über die Benutzeroberfläche (434) eine Auswahl aus einer existierenden Rückkopplungsschleife, die dem HLK-System (322) zugeordnet ist, zu empfangen
unter Verwendung von Informationen, die von dem Benutzer über die Benutzeroberfläche (434) empfangen werden, ein neues Schleifenobjekt zu schaffen, das der existierenden Rückkopplungsschleife entspricht, wobei das neu geschaffene Schleifenobjekt einen Satz von Parametern beinhaltet, der einer Anzahl von Parametern, die der existierenden Rückkopplungsschleife zugeordnet sind, entspricht; und
das neu geschaffene Schleifenobjekt (326) zu der existierenden Rückkopplungsschleife abzubilden, wobei jeder individuelle Parameter des Satzes von Parametern, der in dem neu geschaffenen Schleifenobjekt beinhaltet ist, zu einem entsprechenden individuellen Parameter der Anzahl von Parametern, die der existierenden Rückkopplungsschleife zugeordnet sind, abgebildet wird.

2. Steuervorrichtung (102-1, 102-N, 402) nach Anspruch 1, wobei der Prozessor (430) dazu konfiguriert ist, die Anweisungen auszuführen, um Anweisungen an eine zusätzliche Steuervorrichtung (102-1, 102-N, 402), die der existierenden Rückkopplungsschleife zugeordnet ist, zu senden, um das Abbilden auszuführen.

3. Steuervorrichtung (102-1, 102-N, 402) nach Anspruch 1, wobei die Steuervorrichtung (102-1, 102-N, 402) die dem HLK-System zugeordnet ist, von dem HLK-System entfernt liegt.

4. Steuervorrichtung (102-1, 102-N, 402) nach Anspruch 1, wobei die existierende Rückkopplungsschleife eine Komponente des HLK-Systems steuert, die ein Element einer Zone einer Anlage steuert.

5. Steuervorrichtung (102-1, 102-N, 402) nach Anspruch 4, wobei das Element mindestens eines der Lufttemperatur, des Drucks, der Feuchtigkeit und der Luftqualität der Zone beinhaltet.

6. Steuervorrichtung (102-1, 102-N, 402) nach Anspruch 1, wobei der Prozessor (430) dazu konfiguriert ist, die Anweisungen auszuführen, um die existierende Rückkopplungsschleife zu überwachen.

7. Steuervorrichtung (102-1, 102-N, 402) nach Anspruch 1, wobei das HLK-System ein existierendes HLK-System ist.

8. Steuervorrichtung (102-1, 102-N, 402) nach Anspruch 1, wobei das HLK-System ein neues HLK-System ist.

## Revendications

1. Dispositif de commande (102-1, 102-N, 402) associé à un système de chauffage, de ventilation et de climatisation (HVAC) et comprenant :
une interface utilisateur (434) ;
une mémoire (432) ; et
**caractérisé par**
un processeur (430) configuré pour exécuter des instructions exécutables stockées en mémoire pour :
recevoir, d'un utilisateur via l'interface utilisateur (434), une sélection d'une boucle fermée existante associée au système HVAC (322) ;
créer, à l'aide d'informations reçues de l'utilisateur via l'interface utilisateur (434), un nouvel objet de boucle correspondant à la boucle fermée existante, dans lequel l'objet de boucle nouvellement créé comporte un ensemble de paramètres correspondant à un certain nombre de paramètres associés à la boucle fermée existante ; et
mettre en correspondance l'objet de boucle nouvellement créé avec la boucle fermée existante (326), dans lequel chaque paramètre individuel de l'ensemble de paramètres inclus dans l'objet de boucle nouvellement créé est mis en correspondance avec un paramètre individuel correspondant du nombre de paramètres associés à la boucle fermée existante.

2. Dispositif de commande (102-1, 102-N, 402) selon la revendication 1, dans lequel le processeur (430) est configuré pour exécuter les instructions pour envoyer des instructions à un dispositif de commande (102-1, 102-N, 402) supplémentaire associé à la boucle fermée existante pour exécuter la mise en correspondance.

3. Dispositif de commande (102-1, 102-N, 402) selon la revendication 1, le dispositif de commande (102-1, 102-N, 402) associé au système HVAC étant situé loin du système HVAC.

4. Dispositif de commande (102-1, 102-N, 402) selon la revendication 1, dans lequel la boucle fermée existante commande un composant du système HVAC qui commande un élément d'une zone d'une installation.

5. Dispositif de commande (102-1, 102-N, 402) selon la revendication 4, dans lequel l'élément comporte au moins un élément parmi la température, la pression, l'humidité et la qualité de l'air dans la zone.

6. Dispositif de commande (102-1, 102-N, 402) selon la revendication 1, dans lequel le processeur (430) est configuré pour exécuter les instructions pour surveiller la boucle fermée existante.

7. Dispositif de commande (102-1, 102-N, 402) selon la revendication 1, le système HVAC étant un système HVAC existant.

8. Dispositif de commande (102-1, 102-N, 402) selon la revendication 1, le système HVAC étant un nouveau système HVAC.
